# EUROPÄISCHE PATENTSCHRIFT

(11) **EP 2 964 428 B1**
(45) Veröffentlichungstag und Bekanntmachung des Hinweises auf die Patenterteilung: **29.05.2019**
(21) Anmeldenummer: 13708689.8
(22) Anmeldetag: 07.03.2013
(51) Int. Cl.: B25J 9/16

(54) **VERFAHREN ZUR ÜBERPRÜFUNG EINES ROBOTERWEGES**
METHOD FOR CHECKING A ROBOT PATH
PROCÉDÉ DE VÉRIFICATION DE LA TRAJECTOIRE D'UN ROBOT

(43) Veröffentlichungstag der Anmeldung: 13.01.2016
(73) Patentinhaber: ABB Schweiz AG, 5400 Baden (CH)
(72) Erfinder: KIRSTEN, Rene, 35463 Fernwald (DE)
(74) Vertreter: Marks, Frank
(86) Internationale Anmeldenummer: PCT/EP2013/000661
(87) Internationale Veröffentlichungsnummer: WO 2014/135175

(56) Entgegenhaltungen:
- EP-A2- 2 047 955
- DE-A1- 19 804 195

## Beschreibung

Die Erfindung betrifft ein Verfahren zur Überprüfung eines einen Robotercontroller aufweisenden Roboters mit vorgebbarem Sicherheitsbereich.

Es ist allgemein bekannt, dass Roboter in Industrieanlagen zu vielfältigen Zwecken eingesetzt werden, beispielsweise für Montage, Schweißen oder auch Lackieren. Die Steuerung eines derartigen Roboters erfolgt üblicherweise mittels eines Robotercontrollers. Ein Robotercontroller verfügt typischerweise über Eigenschaften einer Rechenvorrichtung und ist also dafür vorgesehen, anhand der in einem Bewegungsprogramm gespeicherten Daten eine programmgemäße Bewegung des Roboters beziehungsweise seines Tool Center Points (TCP) zu bewirken. Daher umfasst ein Bewegungsprogramm auch die Koordinaten eines Bewegungspfades, längs dessen sich der TCP programmgemäß bewegen soll. Hierbei sind üblicherweise auf dem Bewegungspfad liegende Bahnpunkte vorgegeben, welche dann sequentiell miteinander verbunden den Bewegungspfad ergeben.

Roboter sind häufig als sogenannte Knickarmroboter ausgeführt, welche beispielsweise einen Arbeitsbereich von 2-3,5m um eine drehbar gelagerte Basis aufweisen und 5, 6 oder auch 7 Bewegungsfreiheitsgrade mit einer entsprechenden Anzahl an Bewegungsachsen aufweisen. Um eine Gefährdung von sich im Arbeitsbereich des Roboters aufhaltenden Personen ausschließen zu können, verfügen Roboter beziehungsweise die Robotercontroller in der Regel über eine Sicherheitsfunktionalität. Eine Möglichkeit zur Gewährleistung einer Personensicherheit besteht darin, dem Roboter beziehungsweise dessen Robotercontroller einen Sicherheitsbereich vorzugeben, in welchen der Roboter unter keinen Umständen bewegt werden darf. Jegliche Bewegung des Roboters oder dessen TCP in den Sicherheitsbereich führt üblicherweise unmittelbar zum sofortigen Abschalten des Roboters. So ist es ermöglicht, dass sich Personen in dem Sicherheitsbereich gefahrlos aufhalten können. Die Er-Ermittlung der aktuellen Position des Roboters oder dessen TCP erfolgt beispielsweise über eine Ermittlung der Winkelstellung der jeweiligen Bewegungsachsen und eine geometrische Rückrechnung.

Aus Sicherheitsgründen ist es bei einigen Robotern vorgesehen, um den TCP an sich einen Konturbereich zu definieren, welcher ein Werkzeug umhüllt, welches an der Spitze des Roboterarms befestigt ist, beispielsweise ein Greifwerkzeug. In diesem Fall führt nicht nur ein Hineinfahren des TCP in den Sicherheitsbereich sondern bereits ein Hineinfahren wenigstens eines Punktes des umhüllenden Konturbereiches zu einer Abschaltung des Roboters.

Bei der Inbetriebnahme eines Roboters erweist es sich als schwierig, das korrekte Zusammenspiel von Sicherheitszone und einem Bewegungsprogramm zu verifizieren. Ein für die Produktion vorgesehenes Roboterprogramm ist gerade so zu gestalten, dass ein Konflikt der Roboterbewegungen mit einem Sicherheitsbereich vermieden ist, so dass es auch zu keiner Schutzauslösung, also einem Abbruch eines Bewegungsprogrammes, kommt. Weiterhin muss geprüft werden, ob der geplante Sicherheitsbereich korrekt in der Sicherheitssteuerung des Robotercontrollers konfiguriert wurde. Um eine korrekte Funktionsweise nachzubilden wurden zum Beispiel die Grenzpunkte eines Schutzbereiches manuell angefahren und verifiziert, inwieweit die Einstellung des Schutzbereiches mit den gegebenen Randbedingungen übereinstimmt.

Das Patentdokument EP 2 047 955 A2 offenbart eine Roboterbetriebsbereich Einstellvorrichtung, umfassend eine Einstelleinrichtung zum Einstellen von Betriebsbereichen von jeder Achse sowie eines Arbeitswerkzeugs des Roboters, eine Speichereinrichtung zum Speichern einer Trägheitsverfahrstrecke des Roboters nach Maßgabe der Betriebsgeschwindigkeit des Roboters und/oder des Gewichtes des Arbeitswerkzeugs, eine Ankunftsbereich Berechnungseinrichtung zum Berechnen eines Ankunftsbereiches, in dem jede Achse und das Arbeitswerkzeug des Roboters ankommen, sowie eine Kollisionsbestätigungseinrichtung, zum Bestätigen, ob der Ankunftsbereich mit einer Umgebungsvorrichtung kollidiert. Im Falle einer Kollision wird der Betriebsbereich des Roboters mittels einer Anpassungseinrichtung entsprechend abgeändert.

Ausgehend von diesem Stand der Technik ist es Aufgabe der Erfindung, eine Methode anzugeben, mit welcher ein präzises Überprüfen eines Sicherheitsbereiches sowie das Zusammenspiel bei der Ausführung eines Bewegungsprogrammes zu überprüfen ist.

Diese Aufgabe wird erfindungsgemäß gelöst durch ein Verfahren zur Überprüfung eines einen Robotercontroller aufweisenden Roboters mit vorgebbarem Sicherheitsbereich, wobei der Roboter dafür vorgesehen ist, im Falle eines während der Ausführung eines Bewegungsprogrammes erfolgenden Hineinfahrens seines Tool Center Points (TCP) in den Sicherheitsbereich dieses zu unterbrechen. Das Verfahren umfasst folgende Schritte:
- Festlegen wenigstens eines Sicherheitsbereiches, welcher von zwischen jeweiligen Grenzpunkten aufgespannten Grenzflächen umschlossen ist,
- Vorgabe des wenigstens einen Sicherheitsbereiches an den Robotercontroller, sofern dieser noch nicht vorgegeben ist,
- Festlegen eines grundsätzlich außerhalb des wenigstens einen Sicherheitsbereiches liegenden Testbewegungspfades mit mehreren Bahnpunkten, wobei wenigstens ein Bahnpunkt in unmittelbarer Nähe eines der Grenzpunkte liegt,
- Ausführung eines Testbewegungsprogrammes mit Bewegung des TCP längs des Testbewegungspfades,
- Überprüfung, ob die Ausführung des Testbewegungsprogrammes unterbrochen wird.

Die Grundidee der Erfindung besteht darin, ein - oder bedarfsweise auch mehrere - Testbewegungsprogramme zu erstellen, welche bezüglich des Bezugskoordinatensystems mit einem zuvor festgelegten Sicherheitsbereich abgeglichen wurden und welche gezielt einen, bevorzugter Weise jedoch mehrere Grenzpunkte, durch welche der Sicherheitsbereich definiert ist, als Bahnpunkte umfassen. Auf diese Weise werden bei Ausführung des Testprogrammes gezielt diejenigen Punkte des Arbeitsbereiches des Roboters angefahren, welche hinsichtlich einer möglichen Unterbrechung eines Bewegungsprogrammes aufgrund einer Verletzung des Sicherheitsbereiches am relevantesten sind. Zur Vermeidung von eventuellen Fehlauslösungen werden jedoch nicht genau die Koordinaten der Grenzpunkte angefahren, sondern es wird zumeist vielmehr ein Toleranzbereich von beispielsweise im Bereich von 0,1mm bis 25 mm um einen jeweiligen Grenzpunkt gelegt, welcher im Rahmen dieser Betrachtung unter "unmittelbarer Nähe" zu verstehen ist. Es ist aber durchaus auch noch ein größerer Toleranzbereich unter diesem Begriff zu verstehen.

Der TCP des Roboters wird dann also entsprechend dem Testbewegungsprogramm an jeweilige Raumkoordinaten gefahren, welche außerhalb des Sicherheitsbereiches liegen, jedoch einen dem Toleranzbereich entsprechenden Abstand von einem jeweiligen Grenzpunkt beziehungsweise auch von den jeweiligen den Schutzbereich definierenden Grenzflächen haben. Hierdurch ist gewährleistet, dass - auch wenn die Bahnpunkte längs einer verschliffenen Bahn angefahren werden - ein Hereinfahren des TCP in den Schutzbereich und eine damit verbundene Fehlauslösung vermieden ist. Insbesondere bei sehr geringen Geschwindigkeiten der TCP Bewegung ist ein Verschleifen der Bewegungsbahn jedoch sehr gering ausgeprägt, so dass dann der Toleranzbereich um einen Grenzpunkt auch sehr gering und im Extremfall sogar zu null gewählt werden kann.

Für den Fall, dass ein Konturbereich um den TCP definiert ist, welcher beispielsweise ein am Roboter montiertes Schweiß- oder Greifwerkzeug umhüllt, erfolgt wie eingangs beschrieben eine Unterbrechung eines Bewegungsprogrammes bereits dann, wenn ein einziger Punkt des Konturbereiches in der Sicherheitszone befindlich ist. Um diesem Rechnung zu tragen ist erfindungsgemäß vorgesehen, dass im Falle eines definierten Konturbereiches anstelle des eigentlichen, die programmierte Bewegungsbahn beschreibenden TCP, derjenige Punkt der Hüllfläche des Konturbereiches als Bezugspunkt anzusehen ist, welcher - unter Berücksichtigung der aktuellen Roboterposition - die kürzeste Distanz zu einem jeweiligen Grenzpunkt des Sicherheitsbereiches aufweist. Somit ist dann ein jeweiliger Bahnpunkt in unmittelbarer Nähe eines Grenzpunktes derart festgelegt, dass nicht der eigentliche TCP beziehungsweise Bahnpunkt in unmittelbarer Nähe des Grenzpunktes liegt sondern vielmehr der Punkt der Hüllfläche mit der geringsten Distanz zum jeweiligen Grenzpunkt. Da das der Erfindung zugrunde liegende Prinzip von einem eventuellen Konturbereich unbeeinflusst ist, wird im Weiteren für beide Varianten, nämlich dem eigentlichen TCP als Bezugspunkt beziehungsweise dem Punkt auf der Hüllfläche eines Konturbereiches mit der kürzesten Entfernung zum jeweiligen Grenzpunkt der Begriff "TCP" verwendet.

Als weiterhin vorteilhaft erweist sich, dass durch das sequentielle Anfahren der jeweiligen Grenzpunkte, auch wenn dies unter Berücksichtigung eines Toleranzbereiches erfolgt, die Grenzen des Schutzbereiches gut visualisiert werden. Dies ermöglicht bei der Inbetriebnahme einer Roboteranlage eine abermalige visuelle Überprüfung, ob der Sicherheitsbereich korrekt festgelegt wurde beziehungsweise ob er sich als geeignet erweist.

Insofern das Testbewegungsprogramm bei seiner Ausführung zu keiner Notauslösung führt, kann - aufgrund der unmittelbaren Nähe der Bewegungsbahn des Testbewegungsprogrammes zum Grenzbereich des Sicherheitsbereiches - davon ausgegangen werden, dass das Schutzsystem insoweit fehlerfrei arbeitet, als es außerhalb des Schutzbereiches zu keiner Fehlauslösung kommt. Der Schutzbereich eines Roboters kann hierdurch auf besonders einfache Art verifiziert werden.

Entsprechend einer weiteren bevorzugten Ausgestaltungsvariante der erfindungsgemäßen Methode wird im Falle einer Unterbrechung des Testprogrammes der Roboter danach mit seinem TCP zu einem der Bahnpunkte bewegt und das Testbewegungsprogramm wird dann fortgesetzt.

Dies ermöglicht in vorteilhafter Weise eine Wiederholung der Roboterbewegung im Bereich einer gegebenenfalls erfolgten Unterbrechung, nämlich wenn der TCP des Roboters an einen der bereits passierten Bahnpunkte zurückbewegt wird und von dort das Testbewegungsprogramm wieder fortgesetzt wird. Damit kann überprüft werden, ob es sich bei der Unterbrechung des Bewegungsprogrammes um einen reproduzierbaren Effekt handelt oder nicht. Eine Reproduzierbarkeit des Unterbrechungsverhaltens eines Roboters bei der Abarbeitung eines Bewegungsprogrammes ist ebenfalls ein Kriterium für eine korrekte und sichere Funktionsweise des Roboters.

Für den Fall, dass der TCP nach einer Unterbrechung an einen der noch nicht passierten Bahnpunkte vorwärtsbewegt wird, lässt sich das Testbewegungsprogramm in vorteilhafter Weise von dort fortsetzen, so dass eventuelle weitere Unterbrechungen des Bewegungsprogrammes an anderer Stelle des Testbewegungspfades ebenfalls festgestellt werden können.

Gemäß der erfindungsgemäßen Methode liegt abweichend wenigstens ein Abschnitt des Testbewegungspfades innerhalb des Sicherheitsbereiches. Hintergrund für ein bewusstes partielles Hereinragen des Testbewegungspfades in den Sicherheitsbereich ist, dass so ein aktives Auslösen des Schutzsystems verifiziert werden kann. Dabei sind die betreffenden im Sicherheitsbereich liegenden Bahnpunkte aber auch in diesem Fall in unmittelbarer Nähe eines jeweiligen den Sicherheitsbereich bestimmenden Grenzpunktes. Somit kann geprüft werden, inwieweit eine bereits geringfügige Verletzung des Sicherheitsbereiches zu der dann gewünschten Unterbrechung des Testbewegungsprogrammes führt. Aber auch ein beliebig durch den Sicherheitsbereich geführter Bahnabschnitt muss bei korrekter Funktionsweise selbstverständlich zu einer Unterbrechung des Testbewegungsprogrammes führen.

Auch für diese Variante der Erfindung gilt, dass das nach einer erfolgten Unterbrechung des Testbewegungsprogrammes der TCP des Roboters an einen der Bahnpunkte bewegt werden kann und das Testbewegungsprogramm ab dann fortgesetzt wird. Somit ergibt sich auch hier sowohl die Möglichkeit, eine erfolgte Auslösung zu reproduzieren oder aber zu überprüfen, inwieweit im weiteren Programmverlauf weitere Auslösungen erfolgen.

Einer anderen Variante des erfindungsgemäßen Verfahrens entsprechend erfolgt das Festlegen des Testbewegungspfades anhand geeigneter Algorithmen mittels einer separaten Rechenvorrichtung und die Daten des Testbewegungspfades werden danach dem Robotercontroller zur Verfügung gestellt. Die Rechenvorrichtung ist beispielsweise mit einem Softwareprogrammprodukt ausgestattet, welches eine Simulation der Arbeitsumgebung erlaubt, beispielsweise ein CAD Programm. Dies vereinfacht in vorteilhafter Weise eine gegebenenfalls manuell erfolgende Erstellung eines entsprechenden Testbewegungsprogrammes, welche aber selbstverständlich auch automatisch erfolgen kann. Die entsprechenden Algorithmen benötigen - zumindest für die Ermittlung des wenigstens einen Bahnpunktes in unmittelbarer Nähe eines der Grenzpunkte des Sicherheitsbereiches - dessen Koordinaten sowie gegebenenfalls die Relativkoordinaten eines Konturbereiches. Deshalb ist es in einer Erfindungsvariante vorgesehen, dass vor Festlegen des Testbewegungspfades des Testbewegungsprogrammes sicherheitsrelevante Daten, nämlich insbesondere die Koordinaten der Grenzpunkte des Sicherheitsbereiches sowie gegebenenfalls die Relativkoordinaten eines Konturbereiches, aus dem Robotercontroller in die separate Rechenvorrichtung übertragen werden.

Es ist aber auch entsprechend einer alternativen Variante möglich, den Sicherheitsbereich in der separaten Rechenvorrichtung selbst festzulegen, basierend auf diesen Daten dann ein Testbewegungsprogramm zu erstellen und sowohl die Koordinaten der Grenzpunkte des Sicherheitsbereiches als auch das Testbewegungsprogramm oder zumindest den Testbewegungspfad danach in den Robotercontroller zu übertragen.

Die geeigneten Algorithmen berücksichtigen bei der Ermittlung der Bahnpunkte zumindest einen, bevorzugter Weise jedoch mehrere der den Sicherheitsbereich definierenden Grenzpunkte, wobei der jeweilige Bahnpunkt gegenüber dem jeweiligen Grenzpunkt um einen Toleranzwert von dem Sicherheitsbereich weg verschoben ist.

Es ist entsprechend einer weiteren Erfindungsvariante auch vorgesehen, dass das Festlegen des Testbewegungspfades anhand geeigneter Algorithmen mittels des Robotercontrollers selbst erfolgt. Dieser ist bekannter Weise ebenfalls als eine Rechenvorrichtung anzusehen, welche geeignet dafür ist, anhand geeigneter Algorithmen einen Testbewegungspfad zu definieren. In diesem Fall kann jedoch auf die Verwendung eines Simulationsprogrammes verzichtet werden, vielmehr ist ein Computerprogrammprodukt vorzusehen, welches anhand eines vorzugsweise vorgegebenen Start- bzw. Endpunktes unter Verwendung der Koordinaten wenigstens eines der Grenzpunkte einen Testbewegungspfad generiert. Optional ist ein Benutzerinterface vorgesehen, mittels welchem grundlegende Vorgaben für die Generierung des Testprogrammpfades eingebbar sind.

Gemäß einer weiterhin bevorzugten Erfindungsvariante werden der separaten Rechenvorrichtung beziehungsweise dem Robotercontroller zur Festlegung des Testbewegungspfades zusätzlich Daten von eventuellen Störkonturen innerhalb des Arbeitsbereiches des Roboters zur Verfügung gestellt und der Testbewegungspfad wird anhand der Algorithmen derart festgelegt, dass eine Kollision mit einer Störkontur vermieden ist. Dies betrifft insbesondere den Arbeitsbereich des Roboters. Somit werden Bahnabschnitte, welche beispielsweise von einem Startpunkt im Arbeitsbereich bis in die unmittelbare Nähe eines der Grenzpunkte führen, bei welchen jedoch eine Kollision mit einem dazwischen befindlichen Objekt zu erwarten ist, beispielsweise mittels eines U-förmigen Bahnverlaufes sicher umfahren. Damit ist eine Kollision in vorteilhafter Weise vermieden.

Gemäß einer besonders bevorzugten Erfindungsvariante weist der Roboter eine TCP-Homeposition auf und der Testbewegungspfad fängt an der TCP-Homeposition an und/oder endet dort. Eine derartige Homeposition ist vorzugsweise derart zu wählen, dass von dort eine schnelle Erreichbarkeit insbesondere der überwiegenden Anzahl der Grenzpunkte gewährleistet ist.

Einer bevorzugten Erfindungsvariante folgend ist der Sicherheitsbereich quaderförmig oder weist die Form mehrerer zusammengesetzter Quader auf. Dies erweist sich als besonders einfach für die Festlegung des Sicherheitsbereiches.

Gemäß einer weiteren Variante des erfindungsgemäßen Verfahrens umfasst der Testbewegungspfad als Bahnpunkte in einem jeweiligen Toleranzbereich zumindest einen überwiegenden Teil der dem Roboter zugewandten Grenzpunkte des Sicherheitsbereiches. Die dem Roboter zugewandten Grenzpunkte definieren nämlich den Teil der Begrenzungsfläche des Sicherheitsbereiches, welcher von dem TCP des Roboters vom Arbeitsbereich kommend durchstoßen werden könnte. Der rückwärtige Bereich der Begrenzungsfläche hingegen ist für eine Überprüfung des Roboterverhaltens insoweit nicht von Bedeutung, als in einem solchen Fall der Roboter die Begrenzungsfläche aus dem Sicherheitsbereich kommend durchstoßen würde und eine Unterbrechung des jeweiligen Bewegungsprogrammes bereits bei Eintritt des TCP in den Sicherheitsbereich erfolgt sein müsste.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: einen exemplarischer Roboter mit Arbeits- und Sicherheitsbereich,
- Fig. 2: einen Ausschnitt aus einem erstem exemplarischen Testbewegungspfad,
- Fig. 3: einen Ausschnitt aus einem zweiten exemplarischen Testbewegungspfad,
- Fig. 4: einen Ausschnitt aus einem dritten exemplarischen Testbewegungspfad,
- Fig. 5: einen Ausschnitt aus einem vierten exemplarischen Testbewegungspfad und
- Fig. 6: einen Roboter mit Robotercontroller und Rechenvorrichtung.

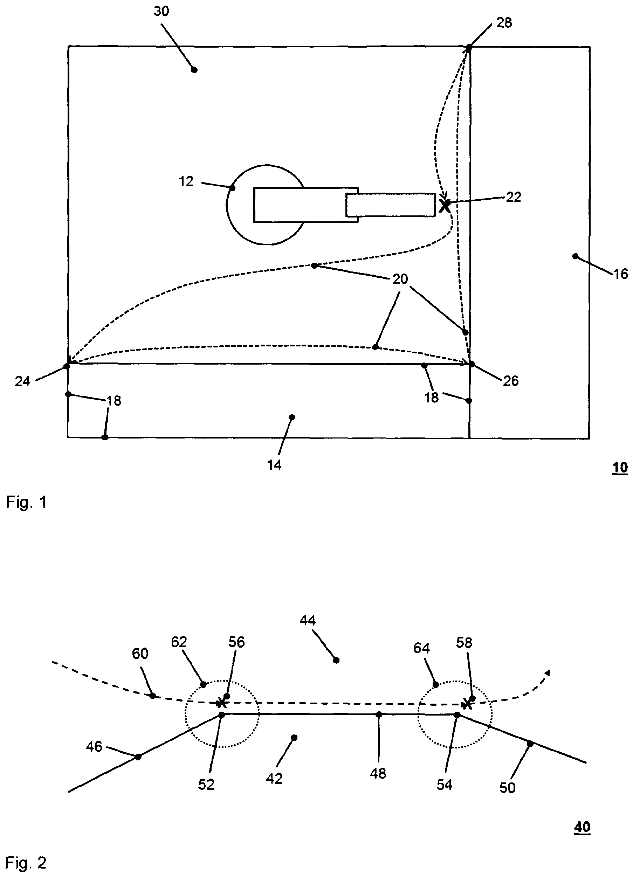

Figur 1 zeigt in einer schematischen Zeichnung 10 einen exemplarischer Roboter 12 mit Arbeits- 30 und Sicherheitsbereich 14, 16. Der Roboter 12 befindet sich im Arbeitsbereich 30, wobei dessen TCP in der Figur eine Homeposition 22 eingenommen hat, von welcher ein Testbewegungspfad 20 eines exemplarischen Testbewegungsprogrammes startet und auch dort endet.

Das Testprogramm umfasst - in dieser exemplarischen zweidimensionalen Darstellung - alle dem Roboter 12 zugewandten Grenzpunkte des Sicherheitsbereiches 14, 16, welche unter Berücksichtigung eines entsprechenden Toleranzbereiches als Bahnpunkte 24, 26, 28 in den Testbewegungspfad 20 aufgenommen sind. Der Testbewegungspfad 20 wird von dem TCP des Roboters 12 während Ausführung des Testbewegungsprogrammes abgefahren, wobei in diesem Beispiel alle Bahnpunkte 22, 24, 26, 28 außerhalb des Sicherheitsbereiches 14, 16 liegen und es demgemäß auch nicht zu einer Unterbrechung des Programmablaufes wegen Verletzung des Schutzbereiches kommen sollte. In einem realen dreidimensionalen Fall wären dann die Sicherheitsbereiche 14, 16 quaderförmig und es würden dann entsprechend mehr Grenzpunkte angefahren werden.

Figur 2 zeigt in einer Darstellung 40 aus einem ersten exemplarischen Testbewegungspfad 60, welcher im Arbeitsbereich 44 eines Roboters aber in unmittelbarer Nähe zu jeweiligen Begrenzungsflächen 46, 48, 50 eines Sicherheitsbereiches 42 verläuft. Um jeweilige den Sicherheitsbereich 42 begrenzende Grenzpunkte 52, 54 sind durch gestrichelte Kreise jeweilige Toleranz- oder Nahbereiche 62, 64 angedeutet. In den jeweiligen Nahbereichen 62, 64 sind mit einem Kreuz Bahnpunkte 56, 58 angedeutet, durch welche der Verlauf des Testbewegungspfades 60 bestimmt ist. Im Idealfall wird der TCP eines nicht gezeigten Roboters längs des Testbewegungspfades 60 im Nahbereich der aufgespannten Grenzflächen bewegt, wobei er nicht in den Sicherheitsbereich eindringt und auch keine Unterbrechung des zugehörigen Bewegungsprogrammes erfolgt.

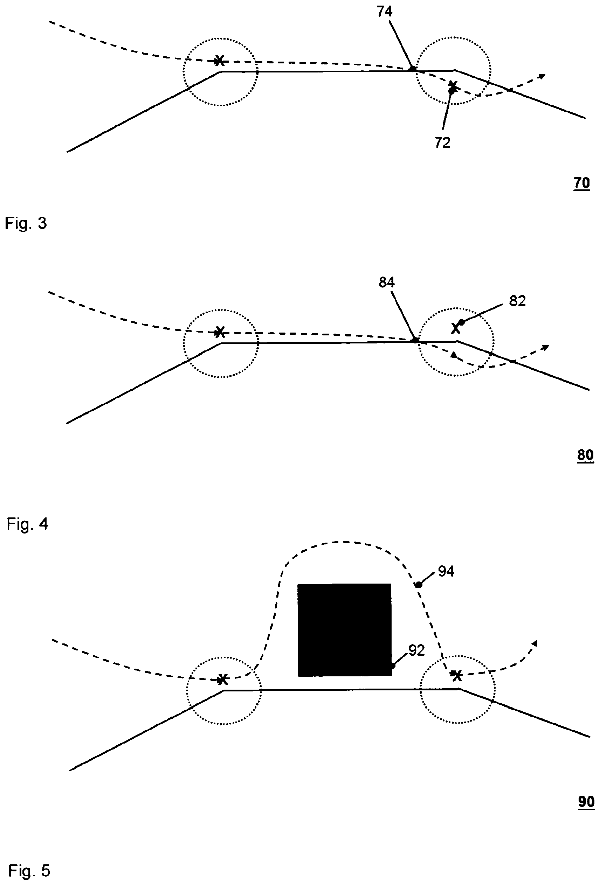

Figur 3 zeigt in einer Darstellung 70 einen ähnlichen Verlauf eines Testbewegungspfades, wobei im Nahbereich des in der Figur rechts gezeigten Grenzpunktes ein zugehöriger Bahnpunkt 72 innerhalb des Sicherheitsbereiches vorgesehen ist. Im Bereich eines Eintrittspunktes 74 schneidet der Verlauf des Testbewegungspfades eine den Sicherheitsbereich umschließenden Grenzfläche. Bei korrekt arbeitendem Roboter beziehungsweise Robotercontroller müsste am Eintrittspunkt 74 eine erwartete Unterbrechung des Testbewegungsprogrammes initiiert werden.

Figur 4 wiederum zeigt in einer Darstellung 80 einen Verlauf eines Testbewegungspfades in der Nähe von jeweiligen einen Sicherheitsbereich umschließenden Grenzflächen. Der gewünschte Bahnverlauf ist durch jeweilige Bahnpunkte vorgegeben, welche alle in unmittelbarer Nähe der jeweiligen Grenzpunkte, aber innerhalb des Arbeitsbereiches angeordnet sind, wie mit dem Bahnpunkt mit der Bezugsnummer 82 angedeutet. Der reale Bahnverlauf weicht insofern von dem gewünschten ab, als im Bereich eines Eintrittspunktes 84 ein Eintritt in den Sicherheitsbereich erfolgt. Bei korrekt arbeitendem Roboter beziehungsweise Robotercontroller müsste am Eintrittspunkt 84 eine unerwartete Unterbrechung des Testbewegungsprogrammes initiiert werden. Dies ist ein Zeichen, dass der Roboter den TCP nicht bahntreu führt und der betroffene Roboter nicht in Betrieb gehen sollte.

Figur 5 zeigt in einer Darstellung 90 einen Verlauf eines weiteren Testbewegungspfades, welcher jedoch in einer Umfahrung 94 um eine Störkontur 92 herumgeführt wird, so dass eine Kollision des Roboters mit der Störkontur vermieden ist.

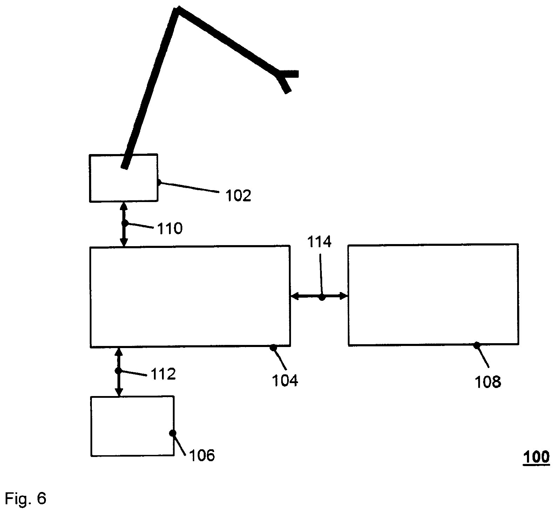

Figur 6 zeigt in einer schematischen Skizze 100 ein Strukturbild eines Roboters 102 mit Robotercontroller 104 und Rechenvorrichtung 108. Diese Komponenten sind über Kommunikations- und Steuerleitungen 110, 114 miteinander verbunden, wobei ein Handeingabegerät mittels einer Kommunikations- und Steuerleitung 112 mit dem Robotercontroller 104 zusammenwirkt und so eine Interaktion eines Bedieners mit dem gezeigten System ermöglicht.

### Bezugszeichenliste

- 10: exemplarischer Roboter mit Arbeits- und Sicherheitsbereich
- 12: exemplarischer Roboter
- 14: erster quaderähnlicher Sicherheitsbereich
- 16: zweiter quaderähnlicher Sicherheitsbereich
- 18: aufgespannte Grenzflächen
- 20: Testbewegungspfad
- 22: TCP-Homeposition
- 24: erster Bahnpunkt von Testbewegungspfad
- 26: zweiter Bahnpunkt von Testbewegungspfad
- 28: dritter Bahnpunkt von Testbewegungspfad
- 30: Arbeitsbereich
- 40: Ausschnitt aus erstem exemplarischen Testbewegungspfad
- 42: Sicherheitsbereich
- 44: Arbeitsbereich
- 46: erste aufgespannte Grenzfläche
- 48: zweite aufgespannte Grenzfläche
- 50: dritte aufgespannte Grenzfläche
- 52: erster Grenzpunkt
- 54: zweiter Grenzpunkt
- 56: erster Bahnpunkt von erstem exemplarischen Testbewegungspfad
- 58: zweiter Bahnpunkt von erstem exemplarischen Testbewegungspfad
- 60: erster exemplarischer Testbewegungspfad
- 62: Nahbereich um ersten Grenzpunkt
- 64: Nahbereich um zweiten Grenzpunkt
- 70: Ausschnitt aus zweitem exemplarischen Testbewegungspfad
- 72: innerhalb des Sicherheitsbereiches liegender Bahnpunkt
- 74: geplanter Eintrittspunkt in Sicherheitsbereich
- 80: Ausschnitt aus drittem exemplarischen Testbewegungspfad
- 82: innerhalb des Sicherheitsbereiches liegender Bahnpunkt
- 84: ungeplanter Eintrittspunkt in Sicherheitsbereich
- 90: Ausschnitt aus viertem exemplarischen Testbewegungspfad
- 92: exemplarische Störkontur
- 94: Umfahrung der Störkontur
- 100: Roboter mit Robotercontroller und Rechenvorrichtung
- 102: Roboter
- 104: Robotercontroller
- 106: Handeingabegerät
- 108: Rechenvorrichtung
- 110: Kommunikations- / Steuerleitung
- 112: Kommunikations- / Steuerleitung
- 114: Kommunikations- / Steuerleitung

## Patentansprüche

1. Verfahren zur Überprüfung eines einen Robotercontroller (104) aufweisenden Roboters (12, 102) mit vorgebbarem Sicherheitsbereich (14, 16, 44), wobei der Roboter (12, 102) dafür vorgesehen ist, im Falle eines während der Ausführung eines Bewegungsprogrammes erfolgenden Hineinfahrens seines Tool Center Points (TCP) in den Sicherheitsbereich (14, 16, 42) dieses zu unterbrechen, umfassend folgende Schritte
• Festlegen eines Sicherheitsbereiches (14, 16, 42), welcher von zwischen jeweiligen Grenzpunkten (52, 54) aufgespannten Grenzflächen (18, 46, 48, 50) umschlossen ist,
• Vorgabe des Sicherheitsbereiches (14, 16, 42) an den Robotercontroller (104), sofern dieser noch nicht vorgegeben ist,
• Festlegen eines grundsätzlich außerhalb des Sicherheitsbereiches (14, 16, 44) liegenden Testbewegungspfades (20, 60) mit mehreren Bahnpunkten (56, 58, 72, 82), wobei wenigstens ein Bahnpunkt (56, 58, 72, 82) in unmittelbarer Nähe (62, 64) eines der Grenzpunkte (52, 54) *in einem diesen umgebenden Toleranzbereich* liegt,
• Ausführung eines Testbewegungsprogrammes mit Bewegung des TCP längs des Testbewegungspfades (20, 60),
• Überprüfung, ob die Ausführung des Testbewegungsprogrammes unterbrochen wird,
dass abweichend wenigstens ein Abschnitt des Testbewegungspfades (20, 60) innerhalb des Sicherheitsbereiches (14, 16, 42) liegt, und wenigstens einer der Bahnpunkte (56, 58, 72, 82) in unmittelbarer Nähe eines jeweiligen Grenzpunktes (52, 54) in einem diesem umgebenden Toleranzbereich innerhalb des Sicherheitsbereiches (14, 16, 42) liegt.

2. Verfahren nach Anspruch 1, **dadurch gekennzeichnet, dass** im Falle einer Unterbrechung des Testprogrammes der Roboter (12, 102) danach mit seinem TCP zu einem der Bahnpunkte (56, 58, 72, 82) bewegt wird und das Testbewegungsprogramm dann fortgesetzt wird.

3. Verfahren nach einem der vorherigen Ansprüche, **dadurch gekennzeichnet, dass** das Festlegen des Testbewegungspfades (20, 60) anhand geeigneter Algorithmen mittels einer separaten Rechenvorrichtung (108) erfolgt und die Daten des Testbewegungspfades (20, 60) danach dem Robotercontroller (104) zur Verfügung gestellt werden.

4. Verfahren nach Anspruch 3, **dadurch gekennzeichnet, dass** vor Festlegen des Testbewegungspfades (20, 60) sicherheitsrelevante Daten aus dem Robotercontroller (104) in die separate Rechenvorrichtung (108) übertragen werden.

5. Verfahren nach einem der Ansprüche 1 bis 2, **dadurch gekennzeichnet, dass** das Festlegen des Testbewegungspfades (20, 60) anhand geeigneter Algorithmen mittels des Robotercontrollers (104) erfolgt.

6. Verfahren nach einem der Ansprüche 3 bis 5, **dadurch gekennzeichnet, dass** der separaten Rechenvorrichtung (108) beziehungsweise dem Robotercontroller (104) zur Festlegung des Testbewegungspfades (20, 60) zusätzlich Daten von eventuellen Störkonturen (92) innerhalb des Arbeitsbereiches (30, 44) des Roboters (12, 102) zur Verfügung gestellt werden und der Testbewegungspfad (20, 60) anhand der Algorithmen derart festgelegt wird, dass eine Kollision mit einer Störkontur (92) vermieden (94) ist.

7. Verfahren nach einem der vorherigen Ansprüche, **dadurch gekennzeichnet, dass** der Roboter (12, 102) eine TCP-Homeposition (22) aufweist und dass der Testbewegungspfad (20, 60) an der TCP-Homeposition (22) anfängt und/oder endet.

8. Verfahren nach einem der vorherigen Ansprüche, **dadurch gekennzeichnet, dass** der Sicherheitsbereich (14, 16, 42) quaderförmig ist oder die Form mehrerer zusammengesetzter Quader aufweist.

9. Verfahren nach Anspruch 8, **dadurch gekennzeichnet, dass** der Testbewegungspfad (20, 60) als Bahnpunkte (56, 58, 72, 82) in einem jeweiligen Toleranzbereich (62, 64) *die* dem Roboter (12, 102) zugewandten Grenzpunkte (52, 54) des Sicherheitsbereiches (14, 16, 42) umfasst.

## Claims

1. Method for checking a robot (12, 102) having a robot controller (104) and having a predeterminable safety range (14, 16, 44), wherein the robot (12, 102) is provided to interrupt the entry of the tool center point (TCP) of the robot into the safety range (14, 16, 42) in the event of said entry taking place during the execution of a movement program, comprising the following steps
• determining a safety range (14, 16, 42) which is enclosed by boundary surfaces (18, 46, 48, 50) fixed between respective boundary points (52, 54),
• predetermining the safety range (14, 16, 42) on the robot controller (104) if said safety range has not yet been predetermined,
• determining a test movement path (20, 60) which in principle lies outside the safety range (14, 16, 44) and has a plurality of path points (56, 58, 72, 82), wherein at least one path point (56, 58, 72, 82) is located in the immediate vicinity (62, 64) of one of the boundary points (52, 54) in a tolerance range encompassing the latter,
• executing a test movement program by moving the TCP along the test movement path (20, 60),
• checking whether the execution of the test movement program is interrupted,
that, in a deviation, at least one portion of the test movement path (20, 60) lies within the safety range (14, 16, 42), and at least one of the path points (56, 58, 72, 82) lies within the safety range (14, 16, 42) in the immediate vicinity of a respective boundary point (52, 54) in a tolerance range encompassing the latter.

2. Method according to Claim 1, **characterized in that**, in the event of an interruption of the test program, the TCP of the robot (12, 102) is then moved to one of the path points (56, 58, 72, 82) and the test movement program is then continued.

3. Method according to one of the preceding claims, **characterized in that** the test movement path (20, 60) is determined by means of a separate computation device (108) on the basis of suitable algorithms and the data of the test movement path (20, 60) are then made available to the robot controller (104).

4. Method according to Claim 3, **characterized in that**, before the test movement path (20, 60) is determined, safety-relevant data are transmitted from the robot controller (104) to the separate computation device (108).

5. Method according to one of Claims 1 to 2, **characterized in that** the test movement path (20, 60) is determined by means of the robot controller (104) on the basis of suitable algorithms.

6. Method according to one of Claims 3 to 5, **characterized in that** data of possible interfering contours (92) within the working range (30, 44) of the robot (12, 102) are additionally made available to the separate computation device (108) or to the robot controller (104) to determine the test movement path (20, 60), and the test movement path (20, 60) is determined on the basis of the algorithms in such a manner that a collision with an interfering contour (92) is avoided (94).

7. Method according to one of the preceding claims, **characterized in that** the robot (12, 102) has a TCP home position (22), and **in that** the test movement path (20, 60) starts and/or ends at the TCP home position (22).

8. Method according to one of the preceding claims, **characterized in that** the safety range (14, 16, 42) is cuboidal or has the shape of a plurality of fitted-together cuboids.

9. Method according to Claim 8, **characterized in that** the test movement path (20, 60) comprises the boundary points (52, 54) of the safety range (14, 16, 42), which boundary points face the robot (12, 102), as path points (56, 58, 72, 82) in a respective tolerance range (62, 64).

## Revendications

1. Procédé de contrôle d'un robot (12, 102) comportant un dispositif de commande de robot (104) et pourvu d'une zone de sécurité prédéfinie (14, 16, 44), le robot (12, 102) étant prévu pour interrompre la pénétration de son Tool Center Point (TCP) dans la zone de sécurité (14, 16, 42) pendant l'exécution d'un programme de déplacement, le procédé comprenant les étapes suivantes
• définir une zone de sécurité (14, 16, 42) qui est délimitée par des surfaces limites (18, 46, 48, 50) passant entre des points limites respectifs (52, 54),
• spécifier la zone de sécurité (14, 16, 42) au dispositif de commande de robot (104), si celle-ci n'est pas encore donnée,
• définir un chemin de déplacement de test (20, 60) situé essentiellement à l'extérieur de la zone de sécurité (14, 16, 44) et comportant une pluralité de points de trajectoire (56, 58, 72, 82), au moins un point de trajectoire (56, 58, 72, 82) étant situé à proximité immédiate (62, 64) de l'un des points limites (52, 54) dans une plage de tolérance autour de ceux-ci,
• exécuter un programme de déplacement de test avec déplacement du TCP le long du chemin de déplacement de test (20, 60),
• vérifier si l'exécution du programme de déplacement de test est interrompue,
de manière différente au moins un segment du chemin de déplacement de test (20, 60) étant situé dans la zone de sécurité (14, 16, 42) et au moins un des points de trajectoire (56, 58, 72, 82) étant situé à proximité immédiate d'un point limite respectif (52, 54) dans une plage de tolérance, entourant celui-ci, dans la zone de sécurité (14, 16, 42).

2. Procédé selon la revendication 1, **caractérisé en ce que**, en cas d'interruption du programme de test, le robot (12, 102) est alors déplacé avec son TCP vers l'un des points de trajectoire (56, 58, 72, 82) et le programme de déplacement de test est ensuite poursuivi.

3. Procédé selon l'une des revendications précédentes, **caractérisé en ce que** la définition du chemin de déplacement de test (20, 60) est effectuée au moyen d'un dispositif de calcul séparé (108) sur la base d'algorithmes appropriés et les données du chemin de déplacement de test (20, 60) sont ensuite mises à la disposition du dispositif de commande de robot (104).

4. Procédé selon la revendication 3, **caractérisé en ce que** des données relatives à la sécurité sont transmises du dispositif de commande de robot (104) au dispositif de calcul séparé (108) avant de définir la trajectoire de déplacement de test (20, 60).

5. Procédé selon l'une des revendications 1 et 2, **caractérisé en ce que** la définition du chemin de déplacement de test (20, 60) est effectuée au moyen d'un dispositif de commande de robot (104) sur la base d'algorithmes appropriés.

6. Procédé selon l'une des revendications 3 à 5, **caractérisé en ce que** des données de contours parasites (92), situés dans la zone de travail (30, 44) du robot (12, 102), sont mises à la disposition du dispositif de calcul séparé (108) ou du dispositif de commande de robot (104) pour déterminer le chemin de déplacement de test (20, 60) et le chemin de déplacement de test (20, 60) est défini sur la base des algorithmes de manière à éviter (94) une collision avec un contour parasite (92) .

7. Procédé selon l'une des revendications précédentes, **caractérisé en ce que** le robot (12, 102) a une position d'origine TCP (22) et **en ce que** le chemin de déplacement de test (20, 60) commence et/ou se termine à la position d'origine TCP (22).

8. Procédé selon l'une des revendications précédentes, **caractérisé en ce que** la zone de sécurité (14, 16, 42) a la forme d'un parallélépipède ou a la forme d'une pluralité de parallélépipèdes rassemblés.

9. Procédé selon la revendication 8, **caractérisé en ce que** le chemin de déplacement de test (20, 60) comporte comme points de trajectoire (56, 58, 72, 82) dans une plage de tolérance respective (62, 64) les points limites (52, 54), dirigés vers le robot (12, 102), de la zone de sécurité (14, 16, 42).
